# NEUE EUROPÄISCHE PATENTSCHRIFT

(11) **EP 2 014 146 B2**
(45) Veröffentlichungstag und Bekanntmachung des Hinweises auf die Entscheidung über den Einspruch: **02.03.2016**
(45) Hinweis auf die Patenterteilung: 08.02.2012
(21) Anmeldenummer: 07112352.5
(22) Anmeldetag: 12.07.2007
(51) Int. Cl.: A01B 45/02

(54) **Bodenbearbeitungsvorrichtung**
Soil cultivation device
Dispositif de traitement de sol

(43) Veröffentlichungstag der Anmeldung: 14.01.2009
(73) Patentinhaber: Redexim Handel- en Exploitatie Maatschappij B.V., 3702 AC Zeist (NL)
(72) Erfinder: Reincke, Marinus, 3956, CR Leersum (NL)
(74) Vertreter: von Kreisler Selting Werner - Partnerschaft von Patentanwälten und Rechtsanwälten mbB

(56) Entgegenhaltungen:
- EP-A- 0 037 595
- EP-A- 0 853 869
- EP-A1- 1 108 350
- EP-B1- 0 452 449
- WO-A1-02/080651
- WO-A1-2006/102869
- WO-A2-89/12381
- DE-A1- 4 323 315
- JP-A- S5 589 538
- US-A- 3 797 577
- US-A- 4 632 189
- US-A- 6 041 869

## Beschreibung

Die Erfindung betrifft eine fahrbare Bodenbearbeitungsvorrichtung zum Einbringen von Hohlräumen in den Boden nach dem Oberbegriff des Anspruchs 1.

Eine bekannte Bodenbearbeitungsvorrichtung weist einen Maschinenrahmen, einen Antrieb für mindestens ein auf- und abbewegbares Stechwerkzeug auf, wobei das Stechwerkzeug in den Boden einstechbar und wieder herausziehbar ist. An dem Maschinenrahmen ist ein Führungselement, z.B. ein Tragarm, für mindestens ein Stechwerkzeug beweglich geführt. Das Stechwerkzeug befindet sich vor dem Einstechen in einer Ausgangslage unter einem vorgegebenen Einstechwinkel. Ein Werkzeughalter hält ein oder mehrere Stechwerkzeuge. Der Werkzeughalter ist um eine erste Schwenkachse in dem von dem Antrieb auf- und abbewegbaren Führungselement gelagert, um während des Bodeneingriffs, d.h. unter Krafteinwirkung, ein Verschwenken des Stechwerkzeugs relativ zu dem Führungselement zu ermöglichen. Bei Wegfall der Krafteinwirkung übt eine Einrichtung ein um die erste Schwenkachse wirkendes Rückstellmoment auf den Werkzeughalter aus, so dass das Stechwerkzeug nach dem Herausziehen aus dem Boden wieder in die Ausgangslage zurückschwenkt.

Derartige Vorrichtungen dienen dazu, mit Hilfe von Stechwerkzeugen Hohlräume in den Boden einzubringen, wobei in die Tiefenbereiche des Bodens schlitzförmige Hohlräume eingebracht werden und an der Oberfläche möglichst kleine Löcher verbleiben. Die Hohlräume ermöglichen einen besseren Abfluss von Wasser und verbessern die Bodenbelüftung und durch die Auflockerung des Bodens wird das Pflanzenwachstum, insbesondere von Gräsern, verbessert.

Aus der europäischen Offenlegungsschrift EP-A-0037595 ist eine Bodenbearbeitungsvorrichtung bekannt, die zwei parallelogrammartig geführte Tragarme aufweist, die an einem Ende schwenkbar einen Werkzeughalter halten und die am anderen Ende am Maschinenrahmen schwenkbar gelagert sind. Die Schubstange des Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Rückholfeder mit einem Anschlag. Solange sich das Stechwerkzeug außerhalb des Bodens befindet, liegt der Tragarm aufgrund der Federkraft an dem Anschlag an. Bei eingestochenem Stechwerkzeug und Vorwärtsbewegung der Bodenbearbeitungsvorrichtung verschwenkt das Stechwerkzeug mit dem Werkzeughalter entgegen der Fahrtrichtung und der längenveränderliche Tragarm wird gegen die Federkraft verlängert.

Bei den bisher bekannten Boden bearbeitungs vorrichtungen werden Federelemente verwendet, die auf die Stechwerkzeuge einen Rückstellmoment ausüben, so dass sich die Stechwerkzeuge, sobald sie sich außerhalb des Bodens befinden, wieder in die Ausgangslage zurückbewegen. Als Ausgangslage wird im Folgenden die Position bezeichnet, die das mindestens eine Stechwerkzeug kurz vor dem Einstechen aufweist. Außerhalb des Bodens wirkt jedoch, aufgrund der Massenträgheit und der Auf- und Abbewegung, das Trägheitsmoment von Werkzeughalter und Stechwerkzeug dem Rückstellmoment der Feder entgegen. Aus diesem Grund werden Federelemente mit hoher Federsteifigkeit verwendet, um die Stechwerkzeuge wieder in die Ausgangslage zurückzubewegen. Aufgrund der Federelemente mit hoher Federsteife besteht jedoch eine erhöhte Gefahr, dass die Stechwerkzeuge, wenn sie sich noch innerhalb des Bodens befinden, anstatt der gewünschten kleinen Löcher, Schlitze in die Bodenoberfläche einbringen können.

Der Erfindung liegt demzufolge die Aufgabe zugrunde, eine Vorrichtung der eingangs beschriebenen Art zu schaffen, bei der die Gefahr der Schlitzbildung reduziert ist.

Zur Lösung dieser Aufgabe dienen die Merkmale des Anspruchs 1.

Die Erfindung sieht in vorteilhafter Weise vor, dass der Gesamtschwerpunkt von Werkzeughalter und dem mindestens einen Stechwerkzeug in Relation zur ersten Schwenkachse derart angeordnet ist, dass das dem Rückstellmoment entgegenwirkende Trägheitsmoment von Werkzeughalter und Stechwerkzeug kompensiert oder überkompensiert ist.

Der Gesamtschwerpunkt von Werkzeughalter und dem mindestens einen Stechwerkzeug kann in Relation zur ersten Schwenkachse derart angeordnet sein, dass das dem Rückstellmoment entgegenwirkende Trägheitsmoment von Werkzeughalter und Stechwerkzeug derart überkompensiert ist, dass das um die erste Schwenkachse wirkende Trägheitsmoment zumindest einen Teil des Rückstellmoments bildet.

Diese Ausführungsform hat den Vorteil, dass entweder ein Federelement mit geringerer Federsteifigkeit verwendet werden kann oder dass sogar kein Federelement benötigt wird, da das dem Rückstellmoment entgegenwirkende Trägheitsmoment von Werkzeughalter und Stechwerkzeug kompensiert ist oder derart überkompensiert ist, dass das um die erste Schwenkachse wirkende Trägheitsmoment zumindest einen Teil des Rückstellmoments bildet.

Ein weiterer Vorteil besteht darin, dass die Anzahl der Teile reduziert ist und dadurch die Herstellungskosten erheblich reduzierbar sind. Zusätzlich kann die Lebensdauer erhöht werden und die Wartungsarbeiten reduziert werden.

Ein zusätzlicher Vorteil besteht darin, dass, wenn Anschläge vorgesehen sind, um die Rückstellbewegung zurück in die Ausgangslage zu begrenzen, die Stoßbelastung auf den Maschinenrahmen, die Maschinenelemente und insbesondere die Lager reduziert werden kann.

Der Gesamtschwerpunkt von Werkzeughalter und dem mindestens einen Stechwerkzeug kann auf der ersten Schwenkachse liegen.

Bei einem weiteren Ausführungsbeispiel der Erfindung ist vorgesehen, dass eine Zusatzmasse mit dem Werkzeughalter gekoppelt ist, vorzugsweise mit diesem drehfest verbunden ist.

Der Gesamtschwerpunkt von Zusatzmasse, Werkzeughalter und dem mindestens einen Stechwerkzeug ist in Relation zur ersten Schwenkachse derart angeordnet, dass das dem Rückstellmoment entgegenwirkende Trägheitsmoment von Werkzeughalter, Zusatzmasse und dem mindestens einen Stechwerkzeug kompensiert ist oder überkompensiert ist.

Der Gesamtschwerpunkt von Zusatzmasse, Werkzeughalter und dem mindestens einen Stechwerkzeug kann in Relation zur ersten Schwenkachse derart angeordnet sein, dass das dem Rückstellmoment entgegenwirkende Trägheitsmoment von Werkzeughalter, Zusatzmasse und dem mindestens einen Stechwerkzeug derart überkompensiert ist, dass das um die erste Schwenkachse wirkende Trägheitsmoment zumindest einen Teil des Rückstellmoments bildet.

Der Gesamtschwerpunkt von Zusatzmasse, Werkzeughalter und dem mindestens einen Stechwerkzeug kann auf der ersten Schwenkachse liegen.

Bei einem weiteren Ausführungsbeispiel ist vorgesehen, dass der Abstand, vorzugsweise der horizontale Abstand, des Gesamtschwerpunkts von Werkzeughalter und dem mindestens einen Stechwerkzeug oder der Abstand, vorzugsweise der horizontale Abstand, des Gesamtschwerpunkts von Zusatzmasse, Werkzeughalter und dem mindestens einen Stechwerkzeug von der ersten Schwenkachse einstellbar ist, vorzugsweise zentral für alle Werkzeughalter einstellbar ist.

Dies hat den Vorteil, dass damit die Höhe des Trägheitsmoments von Werkzeughalter und dem mindestens einem Stechwerkzeug oder Zusatzmasse, Werkzeughalter und dem mindestens einem Stechwerkzeug einstellbar ist.

Das Führungselement kann ein Tragarm sein, der in einem zweiten Schwenklager an dem Maschinenrahmen schwenkbar gelagert ist.

Dieser Tragarm kann entgegen einer Federkraft längenveränderlich ausgebildet sein. Dies hat den Vorteil, dass damit zusätzlich die Gefahr der Schlitzbildung reduziert werden kann.

Mindestens eine schrauben- oder spiralförmige metallische Zug- oder Druckfeder kann die Federkraft erzeugen, die der Verlängerung des Tragarms entgegenwirkt. Die Feder besitzt vorzugsweise eine degressive Federkennlinie.

Es kann mindestens ein Zug- bzw. Druckfederelement oder ein Federdämpferelement neben dem Tragarm, vorzugsweise parallel zu dem Tragarm, angeordnet sein. Das Federelement lässt ein Verschwenken des Werkzeughalters um die erste Schwenkachse zu und übt bei Wegfall des Bodeneingriffs zumindest einen Teil des Rückstellmoments auf den Werkzeughalter aus, so dass das Stechwerkzeug nach dem Herausziehen aus dem Boden wieder in die Ausgangslage zurückschwenkt.

Bei einem weiteren Ausführungsbeispiel kann vorgesehen sein, dass das Zug- bzw. Druckfederelement oder das Federdämpferelement derart an dem Maschinenrahmen angeordnet ist, dass es ein hohes Rückstellmoment auf den Werkzeughalter ausübt, wenn sich das Stechwerkzeug außerhalb des Bodens befindet, und dass es ein geringes Rückstellmoment auf den Werkzeughalter ausübt, wenn sich das Stechwerkzeug im Boden befindet.

Bei einer weiteren Ausgestaltung der Erfindung ist vorgesehen, dass zwischen Werkzeughalter und Führungselement ein Torsionselement angeordnet ist, das ein Verschwenken des Werkzeughalters relativ zu dem Führungselement zulässt und bei Wegfall der Krafteinwirkung zumindest einen Teil des Rückstellmoments auf den Werkzeughalter ausübt, so dass das Stechwerkzeug nach dem Herausziehen aus dem Boden wieder in die Ausgangslage zurückschwenkt.

Das Torsionselement kann aus mindestens einem Elastomerelement, einem Elastomerverbundelement oder aus einer schrauben- oder spiralförmigen metallischen Torsionsfeder bestehen.

Bei einer weiteren Ausgestaltung der Erfindung ist vorgesehen, dass das Torsionselement mindestens zwei magnetische Elemente aufweist, wobei die mindestens zwei magnetischen Elemente so zueinander ausgerichtet sind, dass sie ein Verschwenken des Werkzeughalters um die erste Schwenkachse zulassen und bei Wegfall des Bodeneingriffs zumindest einen Teil des Rückstellmoments auf den Werkzeughalter ausüben, so dass das Stechwerkzeug nach dem Herausziehen aus dem Boden wieder in die Ausgangslage zurückschwenkt.

Die magnetischen Elemente können aus Dauer- oder aus Elektromagneten bestehen, wobei die Elektromagneten in Abhängigkeit der Bewegungsphase aktivierbar oder deaktivierbar sind.

Im Folgenden werden unter Bezugnahme auf die Zeichnungen Ausführungsbeispiele der Erfindung näher erläutert.

Es zeigen schematisch:
- Fig. 1: eine Seitenansicht auf eine Bodenbearbeitungsmaschine,
- Fig. 2: eine Seitenansicht eines erfindungsgemäßen Ausführungsbeispiels mit Stechwerkzeug,
- Fig. 3: Beschleunigungs- und Geschwindigkeitsverläufe von zwei Punkten des Tragarms,
- Fig. 4: eine Seitenansicht auf ein erfindungsgemäßes Ausführungsbeispiel mit zentraler Positionseinrichtung,
- Fig. 5: eine Seitenansicht eines weiteren Ausführungsbeispiels, bei dem eine spiral- bzw. schraubenförmige Torsionsfeder verwendet ist,
- Fig. 6: eine Seitenansicht auf ein weiteres Ausführungsbeispiel, bei dem ein Elastomer-Metall-Verbundelement verwendet ist,
- Fig. 7: eine Seitenansicht auf ein weiteres erfindungsgemäßes Ausführungsbeispiel, bei dem das Torsionselement drei Magnete aufweist,
- Fig. 8: eine Seitenansicht eines weiteren Ausführungsbeispiels mit Federdämpferelement,
- Fig. 9: ein weiteres Ausführungsbeispiel mit längenveränderlichem Tragarm.

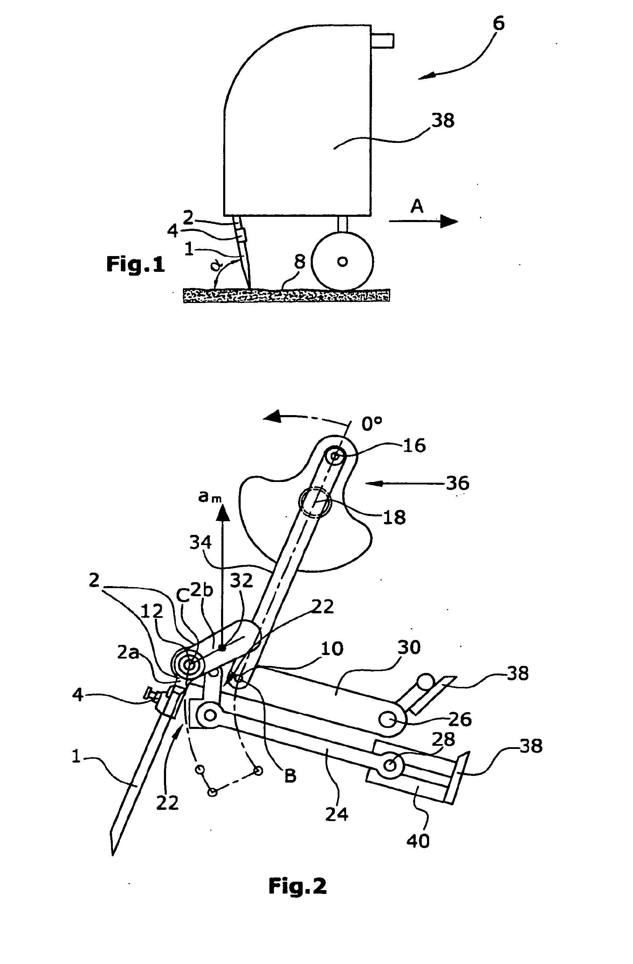

Fig. 1 zeigt eine Seitenansicht einer fahrbaren Bodenbearbeitungsvorrichtung, die selbstfahrend ist oder mit Hilfe einer Zugmaschine gezogen werden kann. Diese Bodenbearbeitungsvorrichtung 6 weist einen Maschinenrahmen 38 auf, an dem über Führungselemente 30 mehrere durch einen Antrieb 36 auf und ab bewegbare Stechwerkzeuge 1 schwenkbar gelagert sind. Die Stechwerkzeuge 1 werden aufgrund der Auf- und Abbewegung abwechselnd in den Boden 8 eingedrückt und führen in dem Boden 8 aufgrund der Vorwärtsbewegung der Bodenbearbeitungsvorrichtung 6 eine Kippbewegung aus. Dadurch wird der Boden 8 unterhalb des Einstechlochs aufgebrochen, wodurch beispielsweise die Drainage des Bodens 8 verbessert wird. Dabei soll das Einstechloch in der Bodenoberfläche trotz der Fahrgeschwindigkeit der Bodenbearbeitungsvorrichtung 6 möglichst klein bleiben.

Das mindestens eine Stechwerkzeuge 1 wird vorzugsweise mit Hilfe einer Haltevorrichtung 4 in einem Werkzeughalter 2 befestigt. Stechwerkzeuge 1 unterschiedlicher Länge und Form sowie Durchmesser können an dem Werkzeughalter 2 befestigt werden, der von einem Führungselement 30 geführt wird. Das Führungselement 30 führt vorzugsweise durch einen Kurbeltrieb 36 angetrieben eine Auf- und Abbewegung aus. Alternativ ist es auch möglich, das Führungselement 30 hydraulisch oder elektrisch anzutreiben.

An dem Führungselement 30 ist der Werkzeughalter 2 um eine erste Schwenkachse 12 schwenkbar gelagert, wobei der Werkzeughalter 2 ein Stechwerkzeug 1 oder eine Gruppe von Stechwerkzeugen 1 aufnimmt, die aufgrund der Auf- und Abbewegung in den Boden 8 einstechbar und wieder herausziehbar sind. Es können mehrere, vorzugsweise nebeneinander angeordnete Stehwerkzeuge 1 oder nebeneinander angeordnete Gruppen von Stechwerkzeugen 1 angetrieben werden. Die Stechwerkzeuge 1, bzw. Gruppen von Stechwerkzeugen 1 werden bevorzugt phasenverschoben angetrieben.

Fig. 2 zeigt eine Seitenansicht auf ein erfindungsgemäßes Ausführungsbeispiel. Ein Kurbeltrieb 36 treibt über eine Schubstange 34 das Führungselement 30 an, das die Form eines Tragarms aufweist. Die Schubstange 34 ist in einem ersten Schwenklager 10 an einen Führungselement 30 gelagert. Das Führungselement 30 ist in einem zweiten Schwenklager 26 am Maschinenrahmen 38 schwenkbar gelagert. An dem Führungselement 30 ist ein Werkzeughalter 2 um eine erste Schwenkachse 12 schwenkbar gelagert. Der Werkzeughalter 2 weist zwei Werk entgegengesetzt voneinander abstehende Arme 2a, 2b auf. Der Arm 2a des Werkzeughalters 2 weist eine Befestigungseinrichtung 4 auf, mit der mindestens ein Stechwerkzeug 1 mit dem Werkzeughalter 2 drehfest verbunden werden kann.

Parallel zu dem Führungselement 30 ist ein Koppelarm 24 angebracht, der an seinem einen Ende in einer Verstelleinrichtung 40 gelagert ist. Die Verstelleinrichtung 40 ist mit dem Maschinenrahmen 38 drehfest verbunden. An dem von der Verstelleinrichtung 40 abgewandten Ende ist ein Anschlag 22 mit dem Koppelarm 24 schwenkbar verbunden. Der Anschlag 22 seinerseits ist an dem Führungselement 30 schwenkbar angelenkt. Die Lage des Anschlags 22 kann mit Hilfe der Verstelleinrichtung 40 verstellt werden. Mit der Lage des Anschlags 22 wird die Ausgangslage des mindestens einen Stechwerkzeugs 1 eingestellt, da das mindestens eine Stechwerkzeug 1 und/oder der Werkzeughalter 2 zumindest vor dem Einstechen an dem Anschlag 22 anliegen. Vorzugsweise kann mit der Verstelleinrichtung 40 die Ausgangslage für alle nebeneinander angeordneten Stechwerkzeuge bzw. Gruppen von Stechwerkzeugen zentral verstellt werden. Die Verstelleinrichtung 40 kann elektrisch, hydraulisch oder pneumatisch betrieben werden. Bei eingestochenem Stechwerkzeug 1 und Weiterbewegung der Bodenbearbeitungsvorrichtung 6 in Fahrtrichtung A wird das mindestens eine Stechwerkzeug 1 um die erste Schwenkachse 12 verschwenkt.

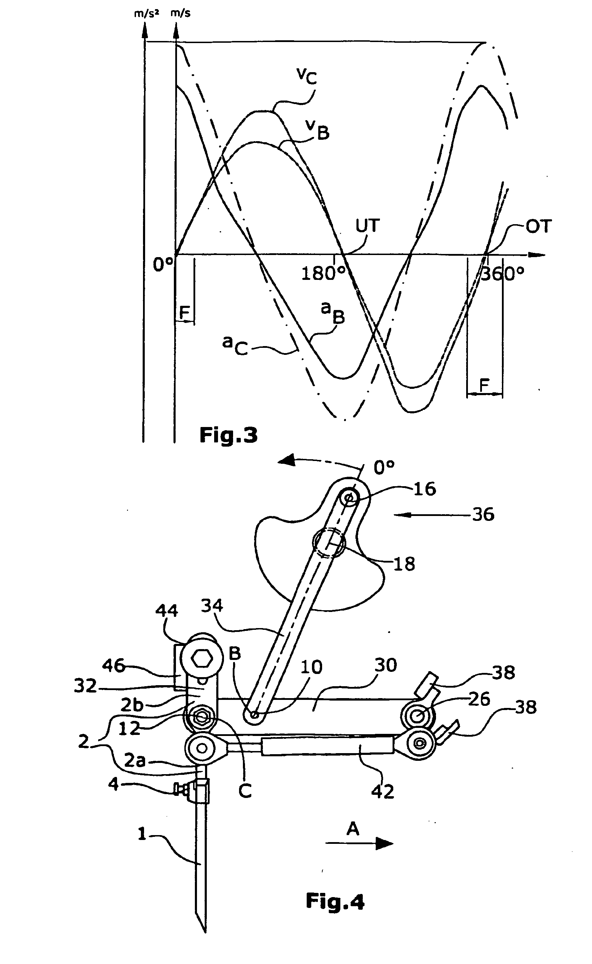

Das Führungselement 30 führt, angetrieben durch die Schubstange 34 des Kurbeltriebs 36, insbesondere in den Punkten B und C eine Auf- und Abbewegung aus. Die Geschwindigkeiten v_{B} und v_{C}, mit denen sich die Punkte B und C des Führungselements 30 auf- und abbewegen, sind für eine konstante Winkelgeschwindigkeit des Kurbeltriebs 36 in Fig. 3 vereinfacht dargestellt.

Auf der x-Achse ist die Winkellage des Kurbelzapfens 16 angegeben. Die Punkte B und C des Führungselements 30 erreichen den unteren Totpunkt UT, wenn der Kurbelzapfen 180° bereits überschritten hat. Dies ist der Fall, weil einerseits die Drehachse des Kurbeltriebs 36 und das erste Schwenklager 10 horizontal versetzt zueinander angeordnet sind und andererseits die Punkte B und C des Führungselements 30, aufgrund der Schwenkbewegung des Führungselements 30 um das zweite Schwenklager 26, keine exakte vertikale Bewegung ausführen.

In Fig. 3 sind ebenfalls die Beschleunigungsverläufe a_{B}, a_{C} der Punkte B und C des Führungselements 30 dargestellt. Im oberen OT und unteren UT Totpunkt der Auf- und Abbewegung, wo die Geschwindigkeiten v_{V}, v_{C} gleich null sind, erreichen die Beschleunigungen a_{B}, a_{C} ihren Maximalwert. Die Maximalwerte der Beschleunigungen a_{B}, a_{C} übersteigen die Erdbeschleunigung um ein Vielfaches. Die Stechwerkzeuge 1 befinden sich in dem mit F markierten Bereich außerhalb des Bodens. In diesem Bereich wirkt eine sehr hohe Beschleunigung in vertikaler Richtung nach oben auf die bei der Auf- und Abbewegung mitbewegten Massen, das heißt auch auf den Werkzeughalter 2 und das mindestens eine Stechwerkzeug 1. Wenn nun der Arm 2b des Werkzeughalters 2 aus Fig. 2 ein entsprechendes Gewicht aufweist und derart in Bezug auf die erste Schwenkachse 12 angeordnet ist, dass der Gesamtschwerpunkt 32 von Werkzeughalter 2 und Stechwerkzeug 1 in Bezug auf die erste Schwenkachse 12 in horizontaler Richtung auf der gegenüberliegenden Seite des mindestens einen Stechwerkzeugs 1 liegt, dann wird ein Rückstellmoment auf den Werkzeughalter 2 und damit die Stechwerkzeuge 1 ausgeübt, sodass die Stechwerkzeuge 1 wieder in die Ausgangslage zurückgeschwenkt werden.

Das Ausführungsbeispiel der Fig. 2 kann alternativ so ausgeführt werden, dass nicht der Werkzeughalter 2 zwei Arme aufweist, sondern das mindestens eine Stechwerkzeug 1. Der Gesamtschwerpunkt von Werkzeughalter 2 und dem mindestens einen Stechwerkzeug 1 mit den zwei Armen ist dann ebenfalls derart angeordnet, dass das um die erste Schwenkachse 12 wirkende Trägheitsmoment von Werkzeughalter 2 und Stechwerkzeug 1 zumindest einen Teil des Rückstellmoments bildet.

Es kann auch eine Zusatzmasse 44 drehfest mit dem Werkzeughalter 2 und/oder Stechwerkzeug 1 verbunden sein, sodass der Gesamtschwerpunkt von Stechwerkzeug 1, Zusatzmasse 44 und Werkzeughalter 2 so angeordnet ist, dass das um die erste Schwenkachse 12 wirkende Trägheitsmoment von Werkzeughalter 2, Stechwerkzeug 1 und Zusatzmasse 44 zumindest einen Teil des Rückstellmoments bildet.

Fig. 4 zeigt ein ähnliches Ausführungsbeispiel wie Fig. 2, mit dem Unterschied, dass anstelle des Koppelarms 24 mit Anschlag 22 eine Federdämpferelement 42 parallel zu dem Führungselement angeordnet ist. Die Federdämpferelement 42 ist auf der einen Seite an dem Maschinenrahmen 38 und auf der gegenüberliegenden Seite am Werkzeughalter 2 schwenkbar gelagert. Das Federdämpferelement 42 lässt ein Verschwenken des Werkzeughalters 2 um die erste Schwenkachse 12 zu und übt bei Wegfall des Bodeneingriffs zumindest einen Teil des Rückstellmoments auf den Werkzeughalter 2 aus, sodass das Stechwerkzeug 1 nach dem Herausziehen aus dem Boden 8 wieder in die Ausgangslage zurückschwenkt. Der Arm 2b des Werkzeughalters 2 weist eine Positionsverstelleinrichtung 46 und eine Zusatzmasse 44 auf. Der Abstand der Zusatzmasse 44 von der ersten Schwenkachse 12 kann mit Hilfe der Positionsverstelleinrichtung 46 vorzugsweise zentral verstellt werden. Die Positionsverstelleinrichtung 46 weist einen Sensor auf, der die Position der Zusatzmasse 44 bestimmen kann. Die Lage der Zusatzmasse 44 kann so verstellt werden, dass der Gesamtschwerpunkt von Werkzeughalter 2, Stechwerkzeug 1 und Zusatzmasse 44 in Relation zur ersten Schwenkachse 12 derart angeordnet ist, dass das dem Rückstellmoment entgegenwirkende Trägheitsmoment von Werkzeughalter 2, Zusatzmasse 44 und dem mindestens einen Stechwerkzeug 1 kompensiert ist oder derart überkompensiert ist, dass das um die erste Schwenkachse wirkende Trägheitsmoment zumindest einen Teil des Rückstellmoments bildet.

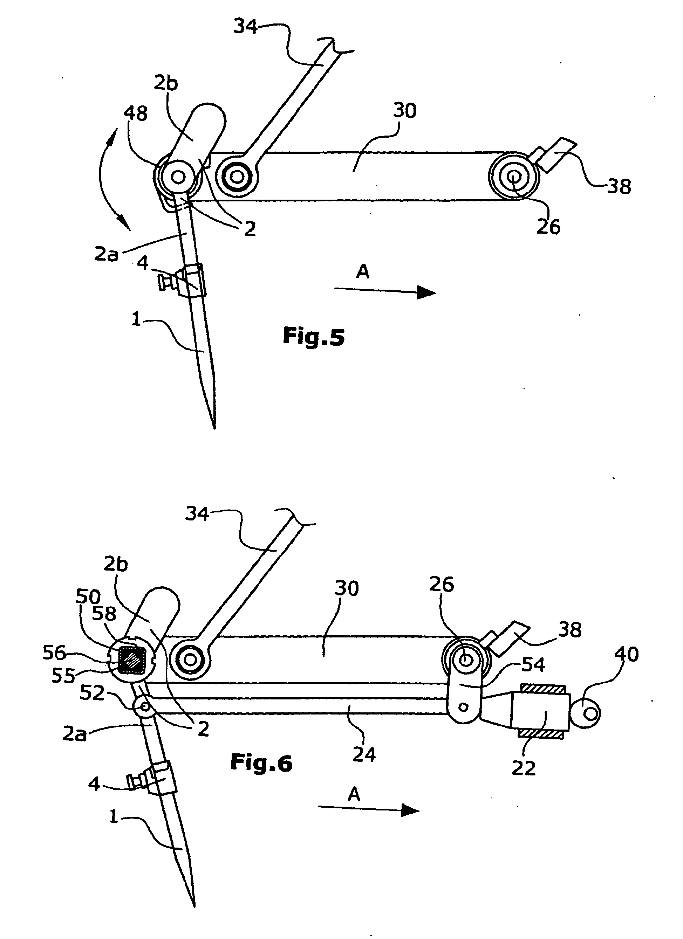

In Fig. 5 ist ein Ausführungsbeispiel dargestellt, das dem aus Fig. 2 ähnlich ist, mit dem Unterschied, dass anstatt des Federdämpferelements 42 ein Torsionselement 48, 50, 64 verwendet wird. Das koaxial zur ersten Schwenkachse 12 wirkende Torsionselement 48, 50, 64 ist zwischen Werkzeughalter 2 und dem Führungselement 30 angebracht.

Vor dem Einstechen ist das Torsionselement 48, 50, 64 unbelastet, wobei in der Ausgangslage kurz vor dem Einstechen ein vorbestimmter Einstechwinkel des Stechwerkzeugs 1 eingestellt ist. Das Torsionselement 48, 50, 64 lässt unter Krafteinwirkung auf das Stechwerkzeug 1, das heißt, bei eingestochenem Stechwerkzeug 1 und Weiterbewegung der Bodenbearbeitungsvorrichtung 6 in Fahrtrichtung A, ein Verschwenken des Stechwerkzeugs 1 entgegen der Fahrtrichtung zu. Bei Wegfall der Krafteinwirkung, das heißt, nach dem Herausziehen des Stechwerkzeugs 1 aus dem Boden 8, übt das Torsionselement 48, 50, 64 zumindest einen Teil des Rückstellmomentes auf den Werkzeughalter 2 aus, sodass das Stechwerkzeug 1 nach dem Herausziehen wieder in die Ausgangslage zurückschwenkt.

In Fig. 5 ist das Torsionselement 48, 50, 64 ein koaxial zur ersten Schwenkachse 12 verlaufende spiral- bzw. schraubenförmige Metalltorsionsfeder 48. Die eine Seite der Metallfeder ist mit dem Führungselement 30 und die andere Seite ist mit dem Werkzeughalter 2 drehfest verbunden. Es ist hier auch möglich ein koaxiales achsen- oder hülsenförmiges Stützelement zur Verstärkung zu verwenden. Dieses Stützelement kann dann ebenfalls am Werkzeughalter 2 und am Führungselement 30 drehbar gelagert sein.

Fig. 6 zeigt ein abgewandeltes Ausführungsbeispiel der Fig. 5, bei dem zusätzlich ein Kopplungsarm 24 an dem Werkzeughalter 2 zum zentralen Verstellen des Einstechwinkels schwenkbar gelagert ist. Der Kopplungsarm 24 ist vor dem Einstechen in den Boden 8 mit dem Anschlag 22 in direktem Kontakt. An dem von dem Werkzeughalter 2 entfernten Ende ist der Kopplungsarm 24 schwenkbar an dem Zwischenelement 54 gelagert, das seinerseits schwenkbar an dem Maschinenrahmen 38 gelagert ist. Der Anschlag 22 kann mit einer Verstelleinrichtung 40, in diesem Fall mit einer exzentrischen Stange, zentral für alle Stechwerkzeuge 1 bzw. Gruppen von Stechwerkzeugen 1 verstellt werden. Der Anschlag 22 begrenzt die Rückstellbewegung der Stechwerkzeuge 1 zurück in die Ausgangslage. Somit kann der Einstechwinkel der Stechwerkzeuge 1 zentral verstellt werden. Alternativ kann der Einstechwinkel auch einzeln verstellt den. Alternativ kann der Einstechwinkel auch einzeln verstellt werden, indem der Anschlag 22 direkt an dem Führungselement 30 oder dem Werkzeughalter 2 befestigt wird.

In Fig. 6 besteht das Torsionselement 48, 50, 64 aus einem Metall-ElastomerVerbundelement 50, wie es beispielsweise von der Firma Rosta erhältlich ist. Das Elastomer-Metall-Verbundelement 50 weist ein Gehäuse 55 auf, das vorzugsweise aus einem viereckigen, bzw. dreieckigen Hohlprofil besteht. Weiter weist das Elastomer-Metall-Verbundelement eine zentrale Stange 56 auf, die sich im Inneren des Gehäuses 55 befindet und ebenfalls vorzugsweise einen viereckigen, bzw. dreieckigen Querschnitt besitzt. Alternativ kann sowohl bei dem Gehäuse 55 als auch bei der Stange 56 ein allgemein polygoner Querschnitt verwendet werden.

Die Stange ist, beispielsweise bei im Wesentlichen quadratischen Profilen des Gehäuses 55 und der Stange 56, gegenüber dem Gehäuse 55 um einen Drehwinkel von 45° versetzt angeordnet. Zwischen dem Gehäuse 55 und der Stange 56 sind Elastomerelemente 58 in den Ecken des Gehäuses 55 angeordnet und erstrecken sich im Wesentlichen über die gesamte Länge des Gehäuses 55 und der Stange 56. Unter Einwirkung eines Drehmoments kann die Stange 56 gegenüber dem Gehäuse 55 verdreht werden. Dabei werden die Elastomerelemente 58 komprimiert und es entsteht ein elastisches Rückstellmoment, das zumindest einen Teil des gesamten Rückstellmoments bildet. Bei einer im Querschnitt dreieckigen Form des Gehäuses 55 und der Stange 56 kann ein größerer Torsionswinkel genutzt werden.

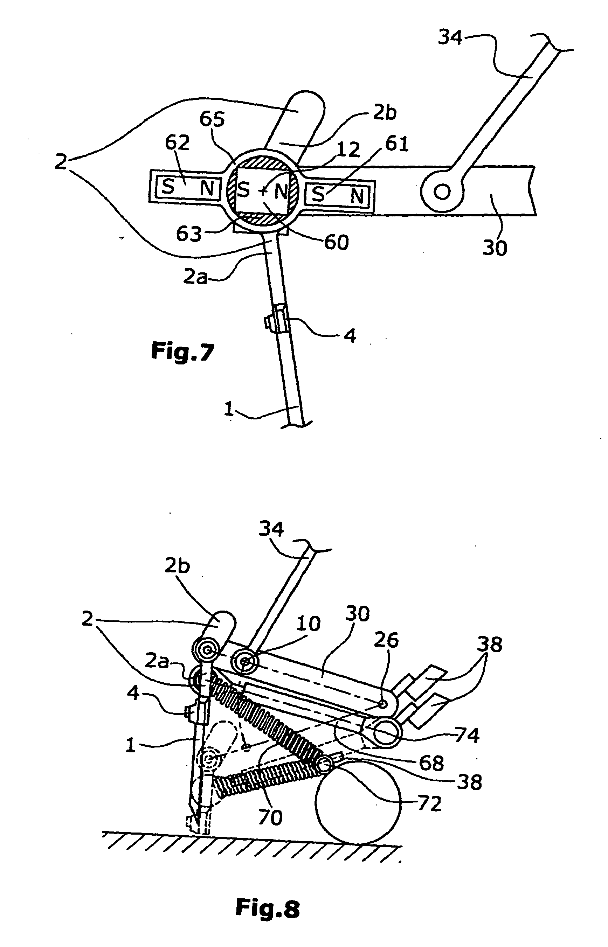

Fig. 7 zeigt ein weiteres Ausführungsbeispiel mit einem Torsionselement 48, 50, 64. Das Torsionselement 48, 50, 64 weist in dem Fall drei magnetische Elemente auf. Das erste magnetische Element 60 befindet sich innerhalb eines achsenförmigen Halteelements 63 und ist mit diesem drehfest verbunden. Das Halteelement 63 ist mit dem Führungselement 30 drehfest verbunden. Das Halteelement 63 weist einen runden Querschnitt auf. Das Halteelement 63 wird von mindestens einem weiteren beweglichen Zwischenelement 65 umschlossen, das mit dem Werkzeughalter 2 drehfest verbunden ist. Der Werkzeughalter 2 kann um die erste Schwenkachse 12 relativ zu dem als Schwenklager dienenden Halteelement 63 verschwenkt werden. Innerhalb des Zwischenelements 65 sind gegenüberliegend zwei weitere magnetische Elemente 61, 62 angeordnet.

Solange sich das Stechwerkzeug 1 in der Ausgangs- und Ruhelage befindet, ist der Nordpol des zweiten magnetischen Elements 62 auf der Seite des Südpols des ersten magnetischen Elements 60 und der Südpol des dritten magnetischen Elements 61 auf der Seite des Nordpols des ersten magnetischen Elements 60 angeordnet.

Bei eingestochenem Stechwerkzeug 1 und Weiterbewegung der Bodenbearbeitungsvorrichtung 6 wird der Werkzeughalter 2 entgegen eines magnetischen Momentes um die erste Schwenkachse 12 relativ zu dem Halteelement 63 verschwenkt. Sobald sich das Stechwerkzeug 1 außerhalb des Bodes befindet, bewegt das magnetische Rückstellmoment der magnetischen Elemente 60, 61, 62, das zumindest einen Teil des gesamten Rückstellmomentes darstellt, das Stechwerkzeug 1 wieder in die Ausgangslage zurück.

Die magnetischen Elemente 60, 61, 62 können aus Dauer- oder aus Elektromagneten bestehen. Im Falle eines Elektromagneten besteht die Möglichkeit, den Strom nur in bestimmten Bewegungsphasen einzuschalten, z.B. in denen sich das Stechwerkzeug 1 nicht in Kontakt mit dem Boden 8 befindet.

Das Halteelement 63, das Zwischenelement 65, das Führungselement 30 und der Werkzeughalter 2 bestehen vorzugsweise aus nicht- bzw. schlecht magnetisierbarem Material, wie z.B. nicht magnetisierbarer Stahl (U-Boot-Stahl), hochfeste Metalle, Kunststoff, vorzugsweise Duroplast oder aus keramischem Material.

In Fig. 7 ist der Gesamtschwerpunkt von Werkzeughalter 2, Zwischenelement 65, zweiten 62 und dritten 61 magnetischen Element und dem mindestens einen Stechwerkzeug 1 in Relation zur ersten Schwenkachse 12 derart angeordnet, dass das dem Rückstellmoment entgegenwirkende Trägheitsmoment von Werkzeughalter 2, Zwischenelement 65, zweitem 62 und drittem 61 magnetischen Element und dem mindestens einen Stechwerkzeug 1 kompensiert ist oder derart überkompensiert ist, dass das um die erste Schwenkachse 12 wirkende Trägheitsmoment zumindest einen Teil des Rückstellmoments bildet.

Fig. 8 zeigt ein weiteres Ausführungsbeispiel bei dem ein Dämpferelement 68 dem Führungselement 30 parallel angeordnet ist. Das Dämpferelement 68 ist auf der einen Seite am Werkzeughalter 2 und auf der gegenüberliegenden Seite am Maschinenrahmen 38 schwenkbar gelagert. Eine Feder 70 ist ebenfalls an dem Werkzeughalter 2 und auf der gegenüberliegenden Seite am Maschinenrahmen 38 schwenkbar gelagert. Die Feder 70 ist jedoch nicht parallel zum Führungselement 30 angeordnet. Die Feder 70 ist so angeordnet, dass die Feder 70 die größte Federlänge aufweist, wenn sich das mindestens eine Stechwerkzeug 1 außerhalb des Bodens 8 befindet, und die geringste Federlänge aufweist, wenn sich das Stechwerkzeug 1 innerhalb des Bodens 8 befindet. Dies hat zur Folge, dass die Feder 70 ein hohes Rückstellmoment auf das mindestens eine Stechwerkzeug 1 ausübt, wenn sich das Stechwerkzeug 1 außerhalb des Bodes 8 befindet, und dass die Feder 70 ein geringes Rückstellmoment auf das mindestens eine Stechwerkzeug 1 ausübt, wenn sich das Stechwerkzeug 1 im Boden 8 befindet.

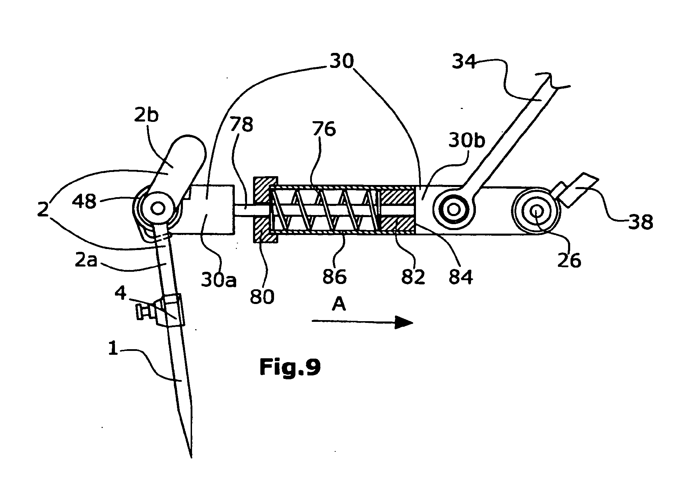

Fig. 9 zeigt ein weiteres Ausführungsbeispiel mit einem zweigeteilten verlängerbaren Führungselement 30. Zwischen den beiden Teilen 30a und 30b des Führungselements 30 ist ein Federelement 76 in Form einer schrauben- bzw. spiralförmigen Druckfeder angeordnet. An dem ersten Teil 30a des Führungselements 30 ist der Werkzeughalter 2 schwenkbar gelagert. Der zweite Teil 30b des Führungselements 30 ist an den Maschinenrahmen 38 schwenkbar gelagert. Die Schubstange 34 des Kurbeltriebs 36 treibt das Führungselement 30 über den zweiten Teil 30b des Führungselements 30 an. Das Federelement 76 sitzt auf einer mit dem ersten Teil 30a des Führungselements 30 verbundenen Kolbenstange 78. Die beiden Teile 30a, 30b des Führungselements 30 sind teleskopartig ausgeführt. Es ist ein Kolben- und Einstellelement 82 vorgesehen, dass das Federelement 76 variabel einstellbar vorspannt und den ersten Teil 30a des Führungselements 30 innerhalb einer Bohrung 86 des zweiten Teils 30b des Führungselements 30 führt. Das hülsenförmige Kolben- und Einstellelement 82 weist eine glatte Manteloberfläche auf, sodass es als Kolbenelement in der Bohrung 86 des zweiten Teils 30b des Führungselements 30 dienen kann. Das Kolben- und Einstellelement 82 und/oder die Kolbenstange 78 sind mit dem zweiten Teil 30b des Führungselements 30 vor dem Einstechen des mindestens einen Stechwerkzeugs 1 in direktem Kontakt, sodass kurz vor und während dem Einstechen des Stechwerkzeugs 1 in den Boden 8 eine direkte Kraftübertragung ohne Federelement 76 von dem zweiten Teil 30b des Führungselements 30 auf den ersten Teil 30a des Führungselements 30 und umgekehrt stattfinden kann. Bei eingestochenem Stechwerkzeug 1 und Weiterbewegung der Bodenbearbeitungsvorrichtung 6 in Fahrtrichtung A wird das mindestens eine Stechwerkzeug 1 verschwenkt. Dieses Ausführungsbeispiel reduziert die Gefahr, dass die Stechwerkzeuge 1 bei zu schneller Weiterbewegung der Bodenbearbeitungsvorrichtung in Fahrtrichtung A Schlitze in die Bodenoberfläche ziehen.

## Patentansprüche

1. Fahrbare Bodenbearbeitungsvorrichtung, mit
- einem Maschinenrahmen (38),
- einem Antrieb (36) für mindestens ein auf- und abbewegbares Stechwerkzeug (1), wobei das Stechwerkzeug (1) in den Boden (8) einstechbar und wieder herausziehbar ist,
- einem an dem Maschinenrahmen (38) beweglich geführten Führungselement (30) für mindestens ein Stechwerkzeug (1), wobei sich das Stechwerkzeug (1) vor dem Einstechen in einer Ausgangslage unter einem vorgegebenen Einstichwinkel befindet,
- einem Werkzeughalter (2) für das Stechwerkzeug (1), der um eine erste Schwenkachse (12) in dem von dem Antrieb auf- und abbewegbaren Führungselement (30) gelagert ist, um während des Bodeneingriffs ein Verschwenken des Stechwerkzeugs (1) relativ zu dem Führungselement (30) zu ermöglichen, wobei zumindest nach dem Herausziehen des Stechwerkzeugs (1) aus dem Boden (8) ein um die erste Schwenkachse (12) wirkendes Rückstellmoment auf den Werkzeughalter (2) einwirkt, so dass das Stechwerkzeug (1) wieder in die Ausgangslage zurückschwenkt,
**dadurch gekennzeichnet,**
**dass** der Gesamtschwerpunkt von Werkzeughalter (2) und dem mindestens einen Stechwerkzeug (1) in Relation zur ersten Schwenkachse (12) derart angeordnet ist, dass das dem Rückstellmoment entgegenwirkende Trägheitsmoment von Werkzeughalter (2) und Stechwerkzeug (1) kompensiert oder überkompensiert ist.

2. Bodenbearbeitungsvorrichtung (6) nach Anspruch 1, **dadurch gekennzeichnet**, der Gesamtschwerpunkt von Werkzeughalter (2) und dem mindestens einen Stechwerkzeug (1) in Relation zur ersten Schwenkachse (12) derart angeordnet ist, dass das dem Rückstellmoment entgegenwirkende Trägheitsmoment von Werkzeughalter (2) und Stechwerkzeug (1) derart überkompensiert ist, dass das um die erste Schwenkachse (12) wirkende Trägheitsmoment zumindest einen Teil des Rückstellmomentes bildet.

3. Bodenbearbeitungsvorrichtung (6) nach Anspruch 1, **dadurch gekennzeichnet, dass** der Gesamtschwerpunkt von Werkzeughalter (2) und dem mindestens einen Stechwerkzeug (1) auf der ersten Schwenkachse (12) liegt.

4. Bodenbearbeitungsvorrichtung (6) nach einem der Ansprüche 1 bis 3, **dadurch gekennzeichnet, dass** eine Zusatzmasse (44) mit dem Werkzeughalter (2) gekoppelt ist, vorzugsweise mit diesem drehfest verbunden ist.

5. Bodenbearbeitungsvorrichtung (6) nach Anspruch 4, **dadurch gekennzeichnet, dass** der Gesamtschwerpunkt von Zusatzmasse (44), Werkzeughalter (2) und dem mindestens einen Stechwerkzeug (1) in Relation zur ersten Schwenkachse (12) derart angeordnet ist, dass das dem Rückstellmoment entgegenwirkende Trägheitsmoment kompensiert ist oder überkompensiert ist.

6. Bodenbearbeitungsvorrichtung (6) nach Anspruch 5, **dadurch gekennzeichnet, dass** der Gesamtschwerpunkt von Zusatzmasse (44), Werkzeughalter (2) und dem mindestens einen Stechwerkzeug (1) in Relation zur ersten Schwenkachse (12) derart angeordnet ist, dass das dem Rückstellmoment entgegenwirkende Trägheitsmoment derart überkompensiert ist, dass das um die erste Schwenkachse (12) wirkende Trägheitsmoment zumindest einen Teil des Rückstellmomentes bildet.

7. Bodenbearbeitungsvorrichtung (6) nach Anspruch 4, **dadurch gekennzeichnet, dass** der Gesamtschwerpunkt von Zusatzmasse (44), Werkzeughalter (2) und dem mindestens einen Stechwerkzeug (1) auf der ersten Schwenkachse (12) liegt.

8. Bodenbearbeitungsvorrichtung (6) nach einem der vorhergehenden Ansprüche, **dadurch gekennzeichnet, dass** der Abstand, vorzugsweise der horizontale Abstand, des Gesamtschwerpunkts von Werkzeughalter (2) und dem mindestens einen Stechwerkzeug (1) oder der Abstand, vorzugsweise der horizontale Abstand, des Gesamtschwerpunkts von Zusatzmasse (44), Werkzeughalter (2) und dem mindestens einem Stechwerkzeug (1) von der ersten Schwenkachse (12) einstellbar ist.

9. Bodenbearbeitungsvorrichtung (6) nach Anspruch 8, **dadurch gekennzeichnet, dass** der Abstand, vorzugsweise der horizontale Abstand, des Gesamtschwerpunkts von Werkzeughalter (2) und dem mindestens einem Stechwerkzeug (1) oder der Abstand, vorzugsweise der horizontale Abstand, des Gesamtschwerpunkts von Zusatzmasse (44), Werkzeughalter (2) und dem mindestens einem Stechwerkzeug (1) von der ersten Schwenkachse (12) zentral für alle Werkzeughalter einstellbar ist.

10. Bodenbearbeitungsvorrichtung nach einem der vorhergehenden Ansprüche, **dadurch gekennzeichnet, dass** das Führungselement (30) ein Tragarm ist, der in einem zweiten Schwenklager (26) an dem Maschinenrahmen (38) schwenkbar gelagert ist.

11. Bodenbearbeitungsvorrichtung (6) nach Anspruch 10, **dadurch gekennzeichnet, dass** der Tragarm entgegen einer Federkraft längenveränderlich ausgebildet ist.

12. Bodenbearbeitungsvorrichtung nach Anspruch 10 oder 11, **dadurch gekennzeichnet, dass** mindestens ein Zug- bzw. Druckfederelement (70) oder ein Federdämpferelement (42) neben dem Tragarm, vorzugsweise parallel zu dem Tragarm, angeordnet ist, wobei das Zug- bzw. Druckfederelement (70) oder das Federdämpferelement (42) ein Verschwenken des Werkzeughalters (2) um die erste Schwenkachse (12) zulässt und bei Wegfall des Bodeneingriff zumindest einen Teil des Rückstellmomentes auf den Werkzeughalter (2) ausübt, so dass das Stechwerkzeug (1) nach dem Herausziehen aus dem Boden (8) wieder in die Ausgangslage zurückschwenkt.

13. Bodenbearbeitungsvorrichtung (6) nach Anspruch 12, **dadurch gekennzeichnet, dass** das Zug- bzw. Druckfederelement (70) oder das Federdämpferelement (42) derart an dem Maschinenrahmen (38) angeordnet ist, dass es ein hohes Rückstellmoment auf den Werkzeughalter (2) ausübt, wenn sich das Stechwerkzeug (1) außerhalb des Bodens (8) befindet, und dass es ein geringes Rückstellmoment auf den Werkzeughalter (2) ausübt, wenn sich das Stechwerkzeug (1) im Boden (8) befindet.

14. Bodenbearbeitungsvorrichtung (6) nach einem der Ansprüche 1 bis 11, **dadurch gekennzeichnet, dass** zwischen Werkzeughalter (2) und Führungselement (30) ein Torsionselement (48, 50, 64) angeordnet ist, das ein Verschwenken des Werkzeughalters (2) relativ zu dem Führungselement (30) zulässt und bei Wegfall der Krafteinwirkung zumindest einen Tell des Rückstellmomentes auf den Werkzeughalter (2) ausübt, so dass das Stechwerkzeug (1) nach dem Herausziehen aus dem Boden (8) wieder in die Ausgangslage zurückschwenkt.

15. Bodenbearbeitungsvorrichtung nach Anspruch 14, **dadurch gekennzeichnet, dass** das Torsionselement (48, 50, 64) aus mindestens einem Elastomerelement, einem Elastomer Metall-Verbundelement (50) oder aus einer schrauben- oder spiralförmigen metallischen Torsionsfeder (48) besteht.

16. Bodenbearbeitungsvorrichtung nach Anspruch 14, **dadurch gekennzeichnet, dass** das Torsionselement (48, 50, 64) mindestens zwei magnetische Elemente (60, 61, 62) aufweist, wobei die mindestens zwei magnetischen Elemente (60, 61, 62) so zueinander ausgerichtet sind, dass sie ein Verschwenken des Werkzeughalters (2) um die erste Schwenkachse (12) zulassen und bei Wegfall des Bodeneingriff zumindest einen Teil des Rückstellmomentes auf den Werkzeughalter (2) ausüben, so dass das Stechwerkzeug (1) nach dem Herausziehen aus dem Boden (8) wieder in die Ausgangslage zurückschwenkt.

17. Bodenbearbeitungsvorrichtung nach Anspruch 16, **dadurch gekennzeichnet, dass** die magnetischen Elemente (60, 61, 62) aus Dauer- oder aus Elektromagneten bestehen.

## Claims

1. A mobile soil working device, comprising
a machine frame (38),
a drive (36) for at least one piercing tool (1) which can be lifted and lowered, the piercing tool (1) being operative to pierce the soil (8) and to be withdrawn again,
a guiding element (30), moveably guided on the machine frame (38), for at least one piercing tool (1), wherein before the piercing the piercing tool (1) is located in a starting position at a predetermined piercing angle,
a tool holder (2) for the piercing tool (1), which holder is pivotable around a first pivot axis (12) in the guiding element (30) that can be lifted and lowered by said drive in order to allow for the piercing tool (1) to be pivoted relative to the guiding element (30) during engagement with the soil, where, at least after withdrawal of the piercing tool (1) from the soil (8), a restoring moment acting around the first pivot axis (12) is exerted onto the tool holder (2), so that the piercing tool (1) pivots back again into the starting position,
**characterized in**
**that** the overall center of gravity of the tool holder (2) and said at least one piercing tool (1) is arranged in relation to the first pivot axis (12) in such a manner that the moment of inertia of the tool holder (2) and the piercing tool (1) that counteracts said restoring moment, is compensated or overcompensated.

2. The soil working device (6) according to claim 1, **characterized in that** the overall center of gravity of the tool holder (2) and the at least one piercing tool (1) is arranged in relation to the first pivot axis (12) in such a manner that the moment of inertia of the tool holder (2) and the piercing tool (1), counteracting the restoring moment, is overcompensated to the effect that the moment of inertia acting around the first pivot axis (12) forms at least part of the restoring moment.

3. The soil working device (6) according to claim1, **characterized in that** the overall center of gravity of the tool holder (2) and the at least one piercing tool (1) is situated on the first pivot axis (12).

4. The soil working device (6) according to any one of claims 1 to 3, **characterized in that** an additional mass (44) is coupled to the tool holder (2) and is preferably fastened thereto for common rotation therewith.

5. The soil working device (6) according to claim 4, **characterized in that** the overall center of gravity of said additional mass (44), the tool holder (2) and the at least one piercing tool (1) is arranged in relation to the first pivot axis (12) in such a manner that said moment of inertia counteracting the restoring moment is compensated or overcompensated.

6. The soil working device (6) according to claim 5, **characterized in that** the overall center of gravity of the additional mass (44), the tool holder (2) and the at least one piercing tool (1) is arranged in relation to the first pivot axis (12) in such a manner that said moment of inertia counteracting the restoring moment is overcompensated to the effect that the moment of inertia acting around the first pivot axis (12) forms at least a part of the restoring moment.

7. The soil working device (6) according to claim 4, **characterized in that** the overall center of gravity of the additional mass (44), the tool holder (2) and the at least one piercing tool (1) is situated on the first pivot axis (12).

8. The soil working device (6) according to any one of the preceding claims, **characterized in that** the distance, preferably the horizontal distance, of the overall center of gravity of the tool holder (2) and the at least one piercing tool (1), or the distance, preferably the horizontal distance, of the overall center of gravity of the additional mass (44), the tool holder (2) and the at least one piercing tool (1) from the first pivot axis (12), is adjustable.

9. The soil working device (6) according to claim 8, **characterized in that** the distance, preferably the horizontal distance, of the overall center of gravity of the tool holder (2) and the at least one piercing tool (1), or the distance, preferably the horizontal distance, of the overall center of gravity of the additional mass (44), the tool holder (2) and the at least one piercing tool (1) from the first pivot axis (12), is adjustable centrally for all tool holders.

10. The soil working device according to any one of the preceding claims, **characterized in that** the guiding element (30) is a support arm pivotably supported in a second pivot bearing (26) on the machine frame (38).

11. The soil working device (6) according to claim 10, **characterized in that** said support arm is configured for length adjustment against a spring force.

12. The soil working device according to claim 10 or 11, **characterized in that** at least one torsion and respectively pressure spring element (70) or a spring damper element (42) is arranged to the side of the support arm, preferably parallel to the support arm, said torsion and respectively pressure spring element (70) or said spring damper element (42) allowing for a pivoting movement of the tool holder (2) around the first pivot axis (12) and, upon release of the engagement with the soil, exerting at least a part of the restoring moment on the tool holder (2) so that the piercing tool (1) after withdrawal from the soil (8) is pivoted back into the starting position again.

13. The soil working device (6) according to claim 12, **characterized in that** said torsion and respectively pressure spring element (70) or said spring damper element (42) is arranged on the machine frame (38) in a manner causing it to exert a high restoring moment on the tool holder (2) if the piercing tool (1) is located outside the soil (8), and causing it to exert a small restoring moment on the tool holder (2) if the piercing tool (1) is located in the soil (8).

14. The soil working device (6) according to any one of claims 1 to 11, **characterized in that**, between the tool holder (2) and the guiding element (30), a torsion element (48,50,64) is arranged which allows for pivoting movement of the tool holder (2) relative to the guiding element (30) and, upon release of the influence of the force, exerts at least a part of the restoring moment on the tool holder (2), so that the piercing tool (1) after withdrawal from the soil (8) will be pivoted back into the starting position again.

15. The soil working device according to claim 14, **characterized in that** said torsion element (48,50,64) consists of at least one elastomeric element, an elastomer-metal compound element (50) or a helically or spirally shaped, metallic torsion spring (48).

16. The soil working device according to claim 14, **characterized in that** said torsion element (48,50,64) comprises at least two magnetic elements (60,61,62), said at least two magnetic elements (60,61,62) being oriented relative to each other in a manner causing them to allow for pivoting movement of the tool holder (2) around the first pivot axis (12) and, upon release of the engagement with the soil, to exert at least a part of the restoring moment on the tool holder (2), so that the piercing tool (1) after withdrawal from the soil (8) will be pivoted back into the starting position again.

17. The soil working device according to claim 16, **characterized in that** said magnetic elements (60,61,62) consist of permanent magnets or solenoids.

## Revendications

1. Dispositif mobile de traitement de sol comprenant:
- un châssis machine (38),
- un entrainement (36) pour au moins un outil de pénétration (1) déplaçable vers le haut et vers le bas, ledit outil de pénétration (1) pouvant être enfoncé dans le sol et retiré du sol (8),
- un élément de guidage (30) guidé de manière mobile sur ledit châssis machine (38), pour au moins outil de pénétration (1), ledit outil de pénétration (1) étant disposé, avant qu'il est enfoncé, dans une position initiale sous un angle d'enfoncement prédéfini,
- un porte-outil (2) pour ledit outil de pénétration (1) supporté sur un premier axe de pivotement (12) dans ledit élément de guidage (30) apte à être déplacé vers le haut et vers le bas par ledit entrainement, pour permettre le pivotement dudit outil de pénétration (1) par rapport audit élément de guidage (30) en état enfoncé dans le sol, un moment de rappel agissant sur le porte-outil (2) au moins après l'outil de pénétration (1) a été retiré du sol (8), ledit moment agissant autour ledit premier axe de pivotement (12), de sorte que ledit outil de pénétration (1) retourne dans la position initiale,
**caractérisé en ce**
**que** le centre de gravité totale du porte-outil (2) et dudit au moins un outil de pénétration (1) est disposé par rapport au premier axe de pivotement (12) de sorte que le moment d'inertie du porte-outil (2) et de l'outil de pénétration (1), agissant à l'encontre du moment de rappel, est compensé ou surcompensé.

2. Dispositif de traitement de sol (6) selon la revendication 1, **caractérisé en ce que** le centre de gravité totale du porte-outil (2) et dudit au moins un outil de pénétration (1) est disposé par rapport au premier axe de pivotement (12) de sorte que ledit moment d'inertie du porte-outil (2) et dudit outil de pénétration (1) agissant à l'encontre du moment de rappel est surcompensé de sorte que le moment d'inertie agissant autour dudit premier axe de pivotement (12) forme au moins une partie du moment de rappel.

3. Dispositif de traitement de sol (6) selon la revendication 1, **caractérisé en ce que** le centre de gravité totale du porte-outil (2) et dudit au moins un outil de pénétration (1) est situé sur le premier axe de pivotement (12).

4. Dispositif de traitement de sol (6) selon l'une des revendications 1 à 3, **caractérisé en ce qu'**une masse additionnelle (44) est accouplée au porte-outil (2), ladite masse étant, de préférence, connectée à celui d'une manière à tourner avec ledit porte-outil.

5. Dispositif de traitement de sol (6) selon la revendication 4, **caractérisé en ce que** le centre de gravité totale de ladite masse additionnelle (44), du porte-outil (2) et dudit au moins un outil de pénétration (1) est disposé par rapport au premier axe de pivotement (12) de sorte que le moment d'inertie agissant à l'encontre du moment de rappel est compensé ou surcompensé.

6. Dispositif de traitement de sol (6) selon la revendication 5, **caractérisé en ce que** le centre de gravité totale de ladite masse additionnelle (44), du porte-outil (2) et dudit au moins un outil de pénétration (1) est disposé par rapport au premier axe de pivotement (12) de sorte que ledit moment d'inertie agissant à l'encontre du moment de rappel est surcompensé de sorte que le moment d'inertie agissant autour dudit premier axe de pivotement (12) forme au moins une partie du moment de rappel.

7. Dispositif de traitement de sol (6) selon la revendication 4, **caractérisé en ce que** le centre de gravité totale de ladite masse additionnelle (44), du porte-outil (2) et dudit au moins un outil de pénétration (1) est situé sur le premier axe de pivotement (12).

8. Dispositif de traitement de sol (6) selon l'une quelconque des revendications précédentes, **caractérisé en ce que** la distance, de préférence la distance horizontale, du centre de gravité totale dudit porte-outil (2) et dudit au moins un outil de pénétration (1) ou la distance, de préférence la distance horizontale, du centre de gravité totale de ladite masse additionnelle (44), dudit porte-outil (2) et dudit au moins un outil de pénétration (1) du premier axe de pivotement (12) est réglable.

9. Dispositif de traitement de sol (6) selon la revendication 8, **caractérisé en ce que** la distance, de préférence la distance horizontale, du centre de gravité totale dudit porte-outil (2) et dudit au moins un outil de, pénétration (1) ou la distance, de préférence la distance horizontale, du centre de gravité totale de ladite masse additionnelle (44), dudit porte-outil (2) et dudit au moins un outil de pénétration (1) du premier axe de pivotement (12) est réglable de manière centrale pour tous les porte-outils.

10. Dispositif de traitement de sol selon l'une quelconque des revendications précédentes, **caractérisé en ce que** ledit élément de guidage (30) est un bras porteur supporté dans un deuxième palier de pivotement (26) sur ledit châssis machine (38).

11. Dispositif de traitement de sol (6) selon la revendication 10, **caractérisé en ce que** ledit bras porteur est configuré pour être variable en longueur à l'encontre d'une force de ressort.

12. Dispositif de traitement de sol selon l'une des revendications 10 ou 11, **caractérisé en ce qu'**au moins un élément de ressort de traction ou de pression (70) ou un élément ressort-amortisseur (42) est disposé à côté du bras porteur, de préférence en parallèle au bras porteur, ledit élément de ressort de traction ou de pression (70) ou ledit élément ressort-amortisseur (42) permettant le pivotement dudit porte-outil (2) autour dudit premier axe de pivotement (12) et exerçant au moins une partie du moment de rappel sur ledit porte-outil (2) si l'outil n'est plus enfoncé dans le sol, de sorte que ledit outil de pénétration (1) retourne dans la position initiale après avoir été retiré du sol (8).

13. Dispositif de traitement de sol (6) selon la revendication 12, **caractérisé en ce que** ledit élément de ressort de traction ou de pression (70) ou ledit élément ressort-amortisseur (42) est disposé sur le châssis machine (38) de sorte qu'il exerce un fort moment de rappel sur ledit porte-outil (2) quand ledit outil de pénétration (1) se trouve hors du sol (8), et qu'il exerce un faible moment de rappel sur ledit porte-outil (2) quand ledit outil de pénétration (1) se trouve dans le sol (8).

14. Dispositif de traitement de sol (6) selon l'une des revendications 1 à 11, **caractérisé en ce qu'**un élément de torsion (48, 50, 64) est disposé entre ledit porte-outil (2) et ledit élément de guidage (30), ledit élément de torsion permettant le pivotement dudit porte-outil (2) par rapport audit élément de guidage (30) et exerçant au moins une partie du moment de rappel sur ledit porte-outil (2) quand l'action de la force est terminée, de sorte que ledit outil de pénétration (1) retourne dans la position initiale après avoir été retiré du sol (8).

15. Dispositif de traitement de sol selon la revendication 14, **caractérisé en ce que** ledit élément de torsion (48, 50, 64) est formé d'au moins un élément élastomère, un élément composite d'élastomère/métal (50) ou d'un ressort de torsion (48) métallique hélicoïdal ou spiroïdal.

16. Dispositif de traitement de sol selon la revendication 14, **caractérisé en ce que** ledit élément de torsion (48, 50, 64) comprend au moins deux éléments magnétiques (60, 61, 62), les au moins deux éléments magnétiques (60, 61, 62) sont, orientés l'un par rapport à l'autre de sorte qu'ils permettent le pivotement dudit porte-outil (2) autour du premier axe de pivotement (12) et exerçant au moins une partie du moment de rappel sur ledit porte-outil (2) quand l'action de la force est terminée, de sorte que ledit outil de pénétration (1) retourne dans la position initiale après avoir été retiré du sol (8).

17. Dispositif de traitement de sol selon la revendication 16, **caractérisé en ce que** lesdits éléments magnétiques (60, 61, 62) sont des aimants permanents ou des électro-aimants.
